(19) Europäisches Patentamt
European Patent Office
Office européen des brevets

(11) **EP 1 654 775 B1**

(12) **EUROPEAN PATENT SPECIFICATION**

(45) Date of publication and mention
of the grant of the patent:
**14.07.2010 Bulletin 2010/28**

(21) Application number: **04735505.2**

(22) Date of filing: **31.05.2004**

(51) Int Cl.:
*H01M 4/04* (2006.01)   *H01M 4/88* (2006.01)

(86) International application number:
**PCT/JP2004/007864**

(87) International publication number:
**WO 2004/114440 (29.12.2004 Gazette 2004/53)**

(54) **ELECTRODE, BATTERY, AND METHOD OF MANUFACTURING THE SAME**

ELEKTRODE, BATTERIE, UND VERFAHREN ZU DESSEN HERSTELLUNG

ELECTRODE, ACCUMULATEUR ET PROCEDE DE FABRICATION DE CEUX-CI

(84) Designated Contracting States:
**DE FR GB**

(30) Priority:   **18.06.2003   JP 2003174135**

(43) Date of publication of application:
**10.05.2006   Bulletin 2006/19**

(73) Proprietor: **NISSAN MOTOR COMPANY LIMITED**
**Yokohama-shi, Kanagawa 221-0023 (JP)**

(72) Inventors:
• **WATANABE, Kyoichi**
**Yokohama-shi, Kanagawa 236-0046 (JP)**
• **HORIE, Hideaki**
**Yokosuka-shi, Kanagawa 237-0076 (JP)**

• **SHIMAMURA, Osamu**
**Kanagawa 233-0015 (JP)**
• **SAITO, Takamitsu**
**Yokohama-shi, Kanagawa 236-0058 (JP)**

(74) Representative: **Schaeberle, Steffen**
**Hoefer & Partner**
**Patentanwälte**
**Pilgersheimer Strasse 20**
**81543 München (DE)**

(56) References cited:
**WO-A-01/80338        WO-A-2004/036678**
**US-A1- 2004 038 808    US-B1- 6 234 225**
**US-B1- 6 423 446**

EP 1 654 775 B1

**Description**

TECHNICAL FIELD

The present invention relates to an electrode and a battery using the electrode. Particularly, the electrode of the present invention is preferably used for a secondary battery for a motor driving power supply of an electric vehicle and the like.

BACKGROUND ART

Recently, introduction of an electric vehicle (EV), a hybrid electric vehicle (HEV), and a fuel-cell vehicle (FCV) is strongly demanded due to growing environmental movement, and motor driving batteries of these vehicles are developed. A repeatedly rechargeable secondary battery is used as the motor driving batteries of these vehicles. Since EV, HEV, and FCV require high output and high energy density, it is practically impossible that a single large battery copes with the high output and the high energy density. Therefore, an assembled battery including a plurality of batteries connected in series is usually used. A thin laminated battery is proposed as a unit battery constituting the assembled battery (see Japanese Patent Application Laid-Open No. 2003-151526).

A battery in which a power generating element, in which a bipolar electrode including a collector, a positive electrode, and a negative electrode is laminated with a polymer electrolyte, is used, and the power generating element is sealed by a packaging material can be cited as an example of the thin laminated battery. A laminated sheet can be used as the packaging material. A laminated sheet is formed of a metal thin film, a resin film, and a heat fusing resin film. The metal thin film includes aluminum foil or the like and prevents permeation of moisture and gas such as oxygen between the outside and inside of the packaging material. The resin film is made of polyethylene terephthalate or the like and physically protects the metal thin film. The heat fusing resin film is made of ionomer or the like and is used to seal the battery. The polymer electrolyte described in Japanese Patent Application Laid-Open No. 2002-110239 can be used as the polymer electrolyte.

Generally, the positive electrode or the negative electrode is produced by applying a coating fluid containing a positive electrode active material or a negative electrode active material onto the collector. In this case, various kinds of coaters such as a roller coater are used. However, quality of the battery is decreased by unevenness of coating generated during the application with the coater. Specifically, there is a problem that heat dissipation characteristics of the battery become uneven and the battery is partially degraded. In the battery having a partially uneven thickness, there is also a problem that the battery is easily resonated by vibration applied to the battery and a crack or rupture of a base material is easily generated. Particularly, in the battery applied to a vehicle, it is necessary that the battery characteristics are maintained over a long term of more than ten years.

For example, means for controlling viscosity of the coating fluid is proposed as the means for reducing the unevenness of the coating of the electrode (see Japanese Patent Application Laid-Open No. 2002-164043).

US 6,423,446 B1 discloses an electrode plate for a secondary battery with a non aqueous electrolyte and a process for producing the same. The electrodes have a high thickness precision at a peripheral portion of the active material layer and/or a positional precision at a boundary portion between the active material layer and a non-coated portion.

US 6,234,225 B1 discloses a cell electrode of a stripe rectangle shape having at least one depolarizing mix layer on a current collector. The thickness of one end portion of the electrode depolarizing mix layer is thicker than the average thickness of the electrode depolarizing mix layer by 2 to 25 %.

WO 01/80338 discloses a method for fabricating integrated microbatteries that enables the assembly of electrode and electrolyte layers with a single printing apparatus such that the various attributes of the layers can be controlled to enable the formation of complex lateral and vertical structures.

DISCLOSURE OF THE INVENTION

However, when the fluid containing the electrode constituent material is applied by using the conventional coater, it is difficult to uniform the coating film more than a certain level. For example, when intermittent coating is performed, a partially built-up portion of the electrode constituent material is generated and the film thickness tends to be partially increased.

When the battery is applied with requirement of high output, such as to a vehicle, it is necessary to reduce the thickness of the electrode to connect the many batteries in series. However, it is difficult that the extremely thin electrode is produced by the conventional coater.

The present invention has been accomplished in order to solve the above problem. It is an object of the present invention to provide a thin electrode with high uniformity in layer thickness.

The first aspect of the present invention provides an electrode comprising: a collector; and an electrode layer which is disposed on the collector and contains an active material, wherein an average thickness of the collector and the electrode layer ranges from 5 to 300 $\mu$m, and a maximum thickness of the collector and the electrode layer is not more than 105% of a minimum thickness of the collector and the electrode layer.

The second aspect of the present invention provides a battery comprising: an electrode including a collector and an electrode layer which is disposed on the collector and contains an active material, wherein an average thickness of the collector and the electrode layer ranges from 5 to 300 $\mu$m, and a maximum thickness of the collector and the electrode layer is not more than 105% of a minimum thickness of the collector and the electrode layer.

The third aspect of the present invention provides a method of manufacturing an electrode comprising: forming an electrode layer by adopting an inkjet method in which a liquid containing an active material is ejected in the form of many particles to adhere the particles to a base material.

The fourth aspect of the present invention provides a method of manufacturing a battery, comprising: forming a negative electrode layer by adopting an inkjet method in which a liquid containing a negative electrode active material is ejected in the form of many particles; and forming a positive electrode layer by adopting the inkjet method in which the liquid containing a positive electrode active material is ejected in the form of many particles.

BRIEF DESCRIPTION OF THE DRAWINGS

FIG. 1A is a top plan view showing an embodiment of an electrode of the present invention;
FIG. 1B is a side view showing the embodiment of the electrode of the present invention;
FIG. 1C is a side view showing another embodiment of the electrode of the present invention;
FIG. 2A is an enlarged view for explaining a microstructure of the electrode of the present invention;
FIG. 2B is a view showing a mass-spring model of an electrode layer constituting the electrode of the present invention;
FIG. 3A is a perspective view showing an embodiment of a battery of the present invention;
FIG. 3B is a cross-sectional view taken along line IIIB-IIIB of FIG. 3A;
FIG. 4 is a graph showing thickness distribution of a lithium secondary battery having a positive electrode and a negative electrode of the present invention and the lithium secondary battery having the positive electrode and the negative electrode which are manufactured by the conventional coater;
FIG. 5A is a plan view of an assembled battery in which the batteries of the present invention are provided;
FIG. 5B is a front view of the assembled battery in which the batteries of the present invention are provided;
FIG. 5C is a side view of the assembled battery in which the batteries of the present invention are provided;
FIG. 6A is a plan view of multiple assembled batteries in which the assembled batteries of the present invention are provided;
FIG. 6B is a front view of the multiple assembled batteries in which the assembled batteries of the present invention are provided;
FIG. 6C is a side view of the multiple assembled batteries in which the assembled batteries of the present invention are provided;
FIG. 7 is a schematic side view of a vehicle mounting the assembled battery or the multiple assembled batteries of the present invention; and
FIG. 8 is a view showing vibration transmission spectrums of Examples and Comparative Examples.

BEST MODE FOR CARRYING OUT THE PRESENT INVENTION

Hereinafter, description will be made of embodiments of the present invention with reference to the drawings.

The electrode of the present invention includes the collector and the electrode layer which is formed to be laminated on the collector and contains the active material. The electrode of the present invention is one, in which an average thickness of the collector and the electrode layer ranges from 5 to 300 $\mu$m and a maximum thickness of the collector and the electrode layer is not more than 105% of a minimum thickness of the collector and the electrode layer.

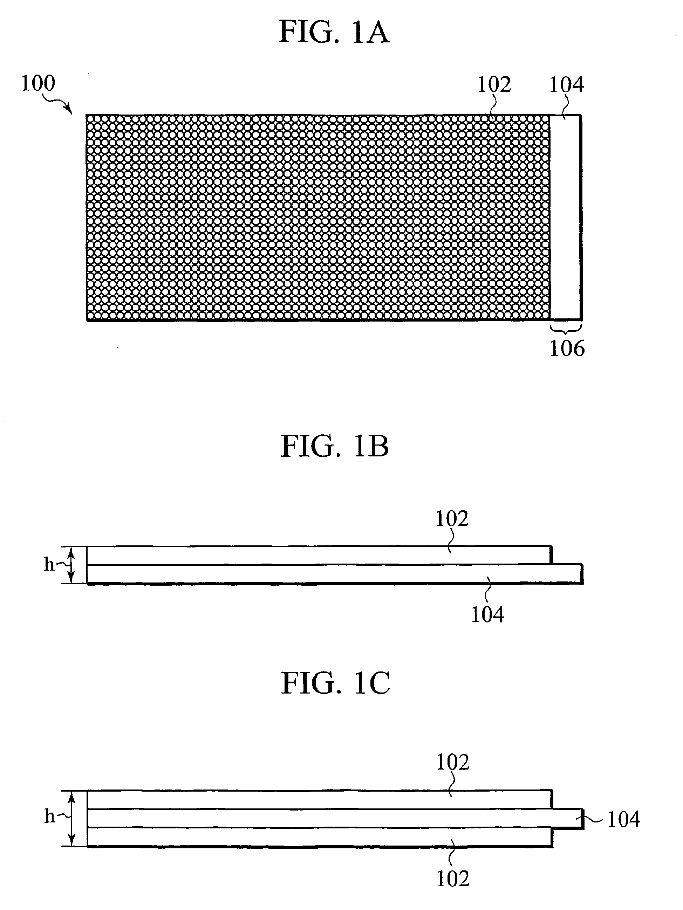

FIG. 1A shows an embodiment of the electrode of the present invention. FIG. 1A shows an electrode 100 in which an electrode layer 102 formed by adopting an inkjet method is laminated on a collector 104. FIG. 1A is exaggerated for the purpose of comprehension of the present invention. Namely, in order to show that the electrode layer 102 is formed by adhesion of particles ejected by the inkjet method, the electrode layer 102 is shown as to include many particles. However, the electrode layer 102 is confirmed as one layer when viewed by the naked eye.

The electrode 100 is sealed in a packaging material, and a positive electrode tab and a negative electrode tab are drawn outside the packaging material. Since the tab is connected to the collector 104 when the electrode layer 102 is laminated on the collector 104, it is also possible to provide a portion 106 (uncoated portion) where the electrode layer 102 is not laminated on the collector 104. Although the uncoated portion can also exist for purposes except the connection of the tab, a decrease in energy density of the battery is brought about when the uncoated portion is increased. Therefore, it is preferable that the uncoated portion is not provided as much as possible except the portion to which the tab is connected. However, it is not always necessary to prohibit the uncoated portion generated unavoidably from generating in manufacturing.

The coater such as a roller coater has been used in order to form the electrode layer. However, it is impossible that the electrode layer, which has the thickness less than a certain level and the uniformity, is formed by use of the known coater. Namely, when the coating film formed by the coater does not have a certain thickness in forming the electrode layer by the coater, the portion where the film is not formed is generated. Further, when the electrode layer is formed by the coater, the film thickness tends to increase in an end portion of the coating film. Namely, the thickness of the coating film tends to increase in an interface between the region where the coating film is formed and the region where the coating film is not formed.

The present invention achieves requirements of the decrease in thickness and the uniformalization of the electrode layer, which have not been conventionally achieved, by adopting the inkjet method. The inkjet method is a printing method in which liquid ink is ejected from a nozzle to adhere to a subject. The inkjet method is classified into a piezoelectric method, a thermal inkjet method, and a bubble jet method (trademark) according to the method of ejecting the ink.

The piezoelectric method is one in which the ink is ejected from the nozzle in such a manner that electric current flows through a piezoelectric element arranged on a bottom of an ink chamber storing the ink, the element deforming by the flow of the current. The thermal inkjet method is one in which the ink is heated with a heater and the ink is ejected by energy of a phreatic explosion in vaporizing the ink. Similarly to the thermal inkjet method, the bubble jet method is one in which the ink is ejected by the energy of the phreatic explosion in vaporizing the ink. Although the thermal inkjet method differs from the bubble jet method in the heated region, those methods have the same basic principle.

The ink for forming the electrode layer is prepared in order to form the electrode layer by adopting the inkjet method. When a positive electrode layer is manufactured, positive electrode ink containing a constituent of the positive electrode layer is prepared. When a negative electrode layer is manufactured, negative electrode ink containing a constituent of the negative electrode layer is prepared. For example, the positive electrode ink contains at least the positive electrode active material. In addition to the positive electrode active material, it is possible that the positive electrode ink contains a conductive material, a lithium salt, a solvent, and the like. In order to improve ionic conductivity of the positive electrode, it is also possible that the positive electrode ink contains a polymer electrolyte raw material which becomes the polymer electrolyte by polymerization and a polymerization initiator.

A base material forming the electrode layer is then prepared. A member situated next to the electrode layer in the battery, e.g. the collector or the polymer electrolyte membrane is used as the base material. Generally, the thickness of the collector ranges from 5 to 20 $\mu$m. However, the collector having the thickness out of the above range may be also used.

The method of forming the electrode layer by adopting the inkjet method will be described. The base material is supplied to the inkjet apparatus which can apply the electrode ink. The electrode ink is ejected by the inkjet method to adhere to the base material. The amount of ink ejected from the nozzle of the inkjet apparatus is extremely small, and the inkjet apparatus can eject droplets of the ink having a substantially equal volume. Accordingly, the electrode layer formed by the adhesion of the electrode ink is very thin and uniform. Further, the adoption of the inkjet method can precisely control the thickness and shape of the electrode layer. When the electrode layer is formed by the conventional coater, it is difficult to form the electrode layer having a complicated shape. On the other hand, the adoption of the inkjet method can form the electrode layer having a desired shape only by designing a predetermined pattern on a computer to print the predetermined pattern. With reference to the thickness, when the electrode layer comes short of the thickness by one-time coating, the printing can be repeated twice or more. Namely, the coating of the same ink is overlapped on the same base material. This allows the electrode layer having the desired thickness to be formed.

The thickness of the electrode layer is not particularly limited. Generally, the thickness of the positive electrode layer ranges from about 1 to 100 $\mu$m and the thickness of the negative electrode layer ranges from about 1 to 140 $\mu$m.

Although the electrode of the present invention can be formed by the inkjet method, the kind of the inkjet method is not particularly limited. As described in Examples, the necessary improvements may be performed according to the ink used.

Main effects brought by the electrode of the present invention will be described below.

In the electrode of the present invention, the thickness of the collector and electrode layer is very uniform. Therefore, exothermic heat from the collector and electrode layer becomes uniform and local degradation is suppressed.

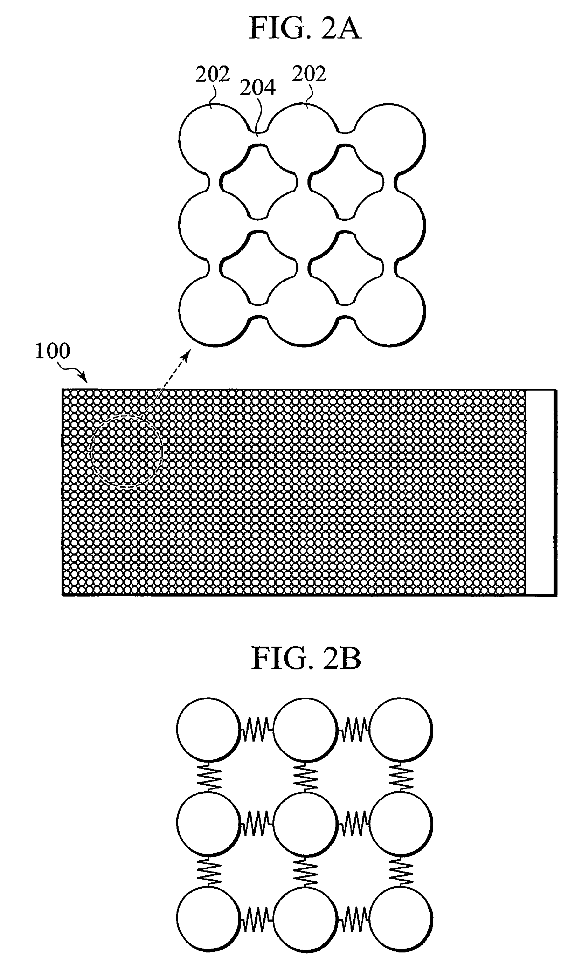

The battery having the electrode of the present invention has durability against the vibration. Since the durability against the vibration is high, the battery having the electrode of the present invention can be applied to the use in which the vibration is applied, e.g. a vehicle. It is assumed that the durability against the vibration is attributed to the uniformity of the layer and the microstructure of the electrode layer produced by the inkjet method. When the uniformity of the layer is high, resonance caused by a distribution of the thickness can be decreased. As shown in FIG. 2A, the electrode layer produced by the inkjet method includes many dots 202 formed by the electrode ink which has adhered onto the collector 104. The dot 202 has the structure in which the dot 202 is connected to the adjacent dot 202 in the interface therebetween by surface tension. The dot 202 acts as a mass and a portion 204 connected by the surface tension acts as a spring, and the microstructure has the action shown in FIG. 2B as a mass-spring model. It is assumed that the durability against the vibration is brought by the action like the mass-spring model. However, a technical scope of the present invention should be determined based on claims. Even if the mechanism increasing the durability against the vibration is different, the mechanism is not beyond the scope of the present invention.

Further, when the electrode is thin, the energy density of the battery using the electrode is improved. If the battery is applied to the use, such as a power supply for a vehicle, in which high output is required, the assembled battery in which the many batteries are connected is used. When the battery is large, the assembled battery also becomes large. Since the electrode of the present invention is very thin, it largely contributes to miniaturization of the assembled battery. With reference to the vehicle, the volume of the vehicle is restricted, and weight saving of the assembled battery affects the improvement of fuel consumption of the vehicle. Therefore, the miniaturization of the assembled battery is particularly beneficial to the case in which the assembled battery is used for a power supply for a vehicle.

The thickness and flatness of the electrode of the present invention will be described next. In the electrode of the present invention, the average thickness of the collector and the electrode layer ranges from 5 to 300 $\mu$m. A flat electrode having the above average thickness can be produced by forming the electrode layer by adopting the inkjet method. When the average thickness of the collector and the electrode layer is less than 5 $\mu$m, a sufficient charge amount cannot be secured because the amount of active material of the electrode layer is restricted. When the average thickness of the collector and the electrode layer exceeds 300 $\mu$m, the flatness described later is deteriorated and the advantage of the present invention cannot be obtained. In this case, as shown in FIGS. 1B and 1C, "the thickness of the collector and the electrode layer" means the total h of the thickness of the collector 104 and the thickness of the electrode layer 102. When the electrode layers 102 are formed on both surfaces of the collector 104, the total thickness in which the thickness of one collector 104 and the two electrode layers 102 are added corresponds to the thickness h of the collector and the electrode layer. In the electrode in which the electrode layer is formed on one surface of the collector, i.e. in the electrode shown in FIG. 1B, the average thickness of the collector and the electrode layer preferably ranges from 6 to 120 $\mu$m. In the electrode in which the electrode layers are formed on both surfaces of the collector, i.e. in the electrode shown in FIG. 1C, the average thickness of the collector and the electrode layer preferably ranges from 7 to 300 $\mu$m.

Although an area of the collector and the electrode layer is not particularly limited, generally, as the area of the collector and the electrode layer is increased, the uniformity of the collector and the electrode layer becomes more difficult to maintain. From this viewpoint, the present invention is particularly beneficial when the area of the collector and the electrode layer is not more than 50 cm$^2$.

While the electrode of the present invention has the above average thickness, the electrode of the present invention is very flat, and the maximum thickness of the collector and the electrode layer is not more than 105% of the minimum thickness of the collector and the electrode layer. Since the electrode of the present invention has the flatness described above, unevenness of the exothermic heat is hardly generated and battery life is lengthened. Further, a crack and rupture which are created by the resonance caused by the distribution of the thickness are also prevented.

The thicknesses of the electrode and the battery are measured by the following procedure in the present application.

The thicknesses of the electrode and the battery can be measured with a micrometer. The kind of the micrometer is not particularly limited, as long as the micrometer obtains measuring data having reliability of a certain level.

In measuring the average thickness of the collector and the electrode layer, the measured domain is divided into nine domains of 3x3. The thicknesses of arbitrary three points are measured in each domain, and the average of the three points is set to the thickness of the domain. The measurement of the thickness is performed in all the domains to calculate the average of all the domains. This operation is repeated ten times or more, and the average of the operations is set to the average thickness of the collector and the electrode layer. In the present application, the number of repetitions of the operation is set to "the repetition number N."

The maximum thickness of the collector and the electrode layer and the minimum thickness of the collector and the electrode layer are measured as the domain where the thickness of the domain is the maximum and the domain where the thickness of the domain is the minimum respectively.

In the average thickness of the collector and the electrode layer located within 10 mm from the uncoated portion where the electrode layer is not laminated on the collector, the domain near the uncoated portion is divided into three portions so that distances from the uncoated portion are equalized. In the embodiment shown in FIG. 1, the electrode layer domain located within 10 mm from the interface between the electrode layer 102 and the uncoated portion 106 is divided into three domains so that one side of each of the three domains becomes the interface. The thicknesses of arbitrary three points are measured in each domain, and the average of the three points is set to the thickness of the domain. The measurement of the thickness is performed in all the domains to calculate the average of all the domains. This operation is repeated ten times or more, and the average of the operations is set to the average thickness of the collector and the electrode layer within 10 mm from the uncoated portion.

The electrode layer is cut when the electrode is adjusted in the predetermined size after the formation of the electrode layer, and the thickness near the cut portion tends to become thin. Therefore, it is also possible to measure the thickness near the cut portion as an indicator of the uniformity of the electrode. In this case, the average thickness of the collector and the electrode layer within 10 mm from the cut portion is measured in a manner similar to the average thickness of the collector and the electrode layer within 10 mm from the uncoated portion.

It is preferable that the average thickness of the collector and the electrode layer within 10 mm from the region where the electrode layer is not laminated on the collector is not more than 104% of the average thickness of the collector and the electrode layer in other regions. The region where the electrode layer is not laminated on the collector means the domain where the electrode layer is not formed like the uncoated portion 106 in FIG. 1. In the electrode layer formed on the collector, the region near the uncoated portion tends to be thickened. The tab tends to be formed in the uncoated portion where the electrode layer is not laminated on the collector. However, when the region near the uncoated portion is thick, the resonance is generated by the vibration applied to the battery to increase a possibility that the tab and the collector are broken.

It is preferable that a ratio ($\sigma/A$) of a standard deviation ($\sigma$) of the thickness of the electrode layer to an average thickness (A) of the electrode layer is not more than 3%. The relationship between the distribution of the thickness and the unevenness of the exothermic heat is already described, and specifically, the unevenness of the exothermic heat is difficult to generate when the electrode has the flatness of the degree satisfying the above value. The resonance caused by the distribution of the thickness is also difficult to generate when the electrode has the flatness of the degree satisfying the above value. The battery life is therefore lengthened.

The high flatness is particularly beneficial when the battery is applied to a vehicle. When the battery is used for the power supply for a vehicle, many batteries are laminated in order to secure the high output. When many batteries are laminated, even a small difference in the thickness is largely reflected in the thickness of the whole of assembled battery. In some cases, the battery cannot be fixed. The present invention solves such problem.

The electrode of the present invention can be applied to both the positive electrode and the negative electrode. As described above, it is preferable that the electrode layer is formed by the inkjet method in which the liquid containing the active material is ejected in the form of many particles to adhere to the predetermined base material. The predetermined base material depends on the manufacturing process. When the electrode layer is formed on the collector, the base material is the collector. When the polymer electrolyte is used as the electrolyte, it is also possible that the collector is arranged after the electrode layer is formed on the polymer electrolyte.

The material constituting the electrode, such as the conductive material and the active material, is not particularly limited in the present application. When the electrode of the present invention is the electrode for the lithium battery, Li-Mn based composite oxide such as $LiMn_2O_4$ and Li-Ni based composite oxide such as $LiNiO_2$ can be cited as the positive electrode active material. In some cases, two or more kinds of the positive electrode active material may be used at the same time. A crystalline carbon material and a noncrystalline carbon material can be cited as the negative electrode active material. Specifically, natural graphite, synthetic graphite, carbon black, activated carbon, carbon fiber, coke, soft carbon, hard carbon, and the like can be cited. In some cases, two or more kinds of the negative electrode active material may be used at the same time.

The configuration of the electrode layer is not particularly limited and can be properly selected according to the application. When the electrode of the present invention is positive electrode, at least the positive electrode active material is contained in the positive electrode layer. In addition to the positive electrode active material, the conductive material, the lithium salt, and the like can be contained in the positive electrode layer. In order to improve the ionic conductivity of the positive electrode, it is also possible that the polymer electrolyte is dispersed in the positive electrode layer. The composition of these materials is not particularly limited.

The battery formed using the electrode of the present invention will be described in detail. The electrode of the present invention can be applied to both the positive electrode and the negative electrode. The electrode of the present invention may be used for at least one of the positive electrode and the negative electrode. It is preferable that both the positive electrode and the negative electrode are the electrode of the present invention.

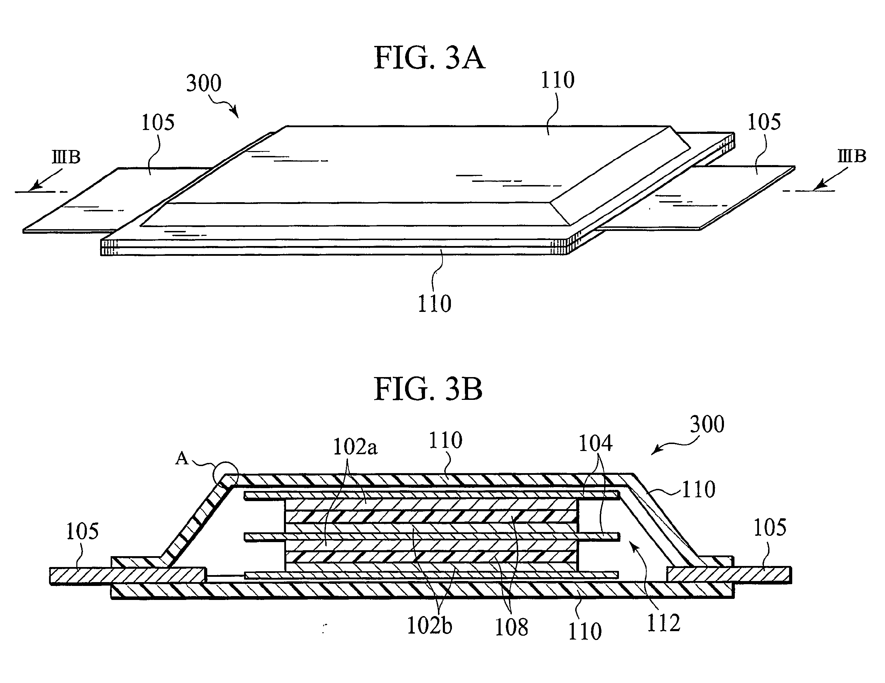

Since the electrode of the present invention has the uniform thickness, the battery having the uniform thickness is obtained. As shown in FIGS. 3A and 3B, a battery 300 of the present invention is preferably a rectangular battery in which a power generating element 112 including a positive electrode 102a and a negative electrode 102b are stored in a packaging material 110 including a polymer metal composite film. Further, the average thickness of the portion in which the power generating element 112 is stored within 10 mm from the end portion of the portion in which the power generating element 112 is stored is not more than 104% of the average thickness in the portion exceeding 10 mm from the end portion.

In this case, "the power generating element" means an element in which the positive electrode 102a, the negative electrode 102b, and the collector 104, and, in some cases, a solid electrolyte membrane 108 are laminated and a charge and discharge reaction actually progresses. When the power generating element 112 is stored in a packaging material 110, tabs 105 are drawn outside the packaging material 110. In order to secure sealing characteristics of the inside, the packaging material 110 is sealed in the region where the power generating element 112 is not stored. Therefore, the thickness of the portion where the power generating element 112 is stored becomes the substantial thickness of the battery 300. When the battery of the present invention has the above mode, it is preferable that the thickness of the portion where the power generating element is stored satisfies the above requirement. Namely, the average thickness of the portion in which the power generating element is stored within 10 mm from the end portion of the portion in which the power generating element is stored is not more than 104% of the average thickness in the portion exceeding 10 mm from the end portion. "The end portion of the portion in which the power generating element is stored" means a boundary concerning the substantial thickness of the battery. Namely, in FIG. 3B, "the end portion of the portion in which the power generating element is stored" means a portion A where the thickness of the battery starts to be steeply thinned. By the use of the battery having the excellent flatness, in which thickness near the boundary is not more than 104% compared to the thickness of the portion which is not near the boundary, the battery can easily be laminated. The thickness of the battery can be measured according to the method of measuring the thickness of the electrode. Generally, there are four sides in the end portion of the portion in which the power generating element is stored. In this case, it is possible that the average thickness is measured in each side for the purpose of the measurement of the average.

The polymer metal composite film is one in which at least a metal foil film and a resin film are laminated. The thin laminated battery is formed by using the packaging material. In the laminated battery having the flatness of the above range, it is difficult to generate the degradation of the battery characteristics, which is caused by the vibration applied to the battery.

In a normal battery, the positive electrode, the electrolyte, and the negative electrode are arranged in this order and sealed in the packaging material. The electrolyte may be either solid or liquid. The packaging material is not particularly limited. Considering the application for a vehicle, the electrolyte is preferably solid. Further, it is preferable that the battery of the present invention is a lithium secondary battery.

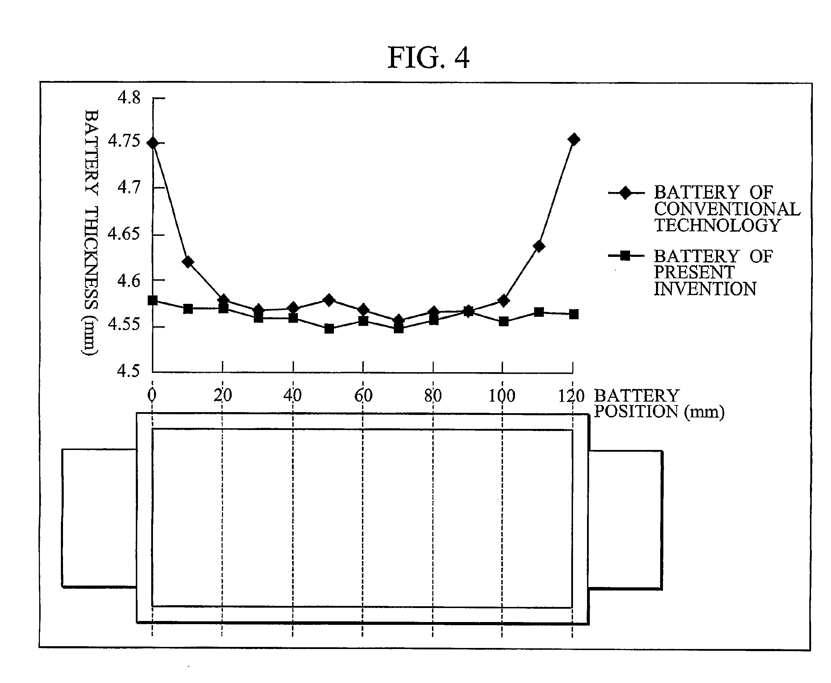

For reference, FIG. 4 shows the thickness distributions of the lithium secondary battery having the positive electrode and the negative electrode of the present invention and the lithium secondary battery having the positive electrode and the negative electrode which are manufactured by using the conventional coater. As shown in FIG. 4, in the conventional battery, the thickness of the battery is steeply increased near the uncoated portion used for the connection to the tab. On the other hand, in the battery of the present invention, the thickness of the battery is maintained even near the uncoated portion used for the connection to the tab.

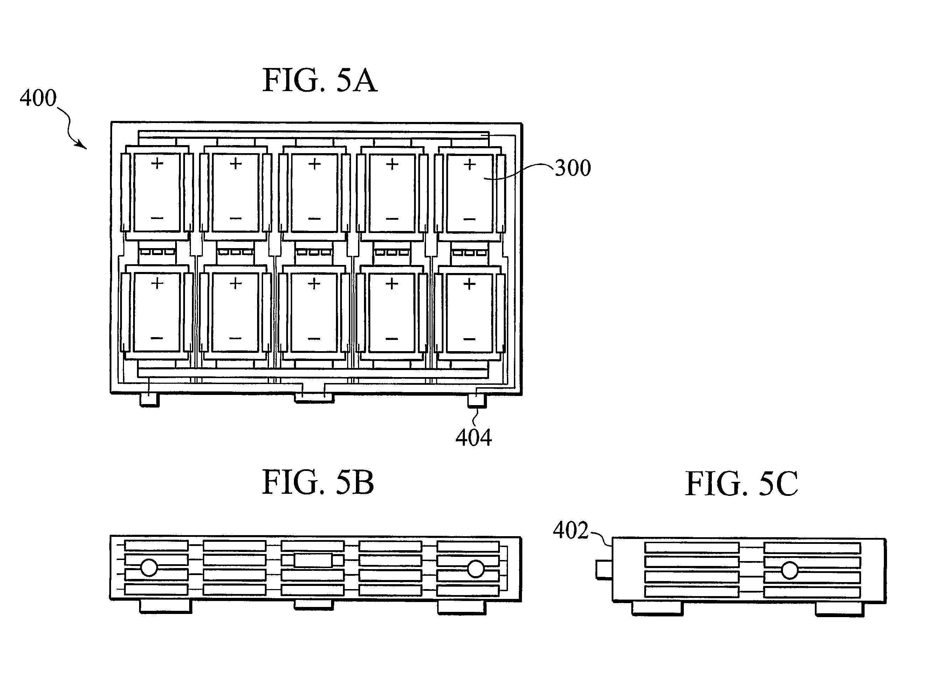

It is possible that the batteries of the present invention are connected in series or in parallel to form the assembled battery or the assembled battery is formed by the combination of the series connection and the parallel connection of the batteries. As shown in FIGS. 5A to 5C, an assembled battery 400 is arranged in a sheathing case 402. Terminals 404 are drawn from the sheathing case 402 to be used for the connection to other devices. In order to clearly show the state in which the assembled battery is mounted, FIGS. 5A to 5C are drawn as perspective views.

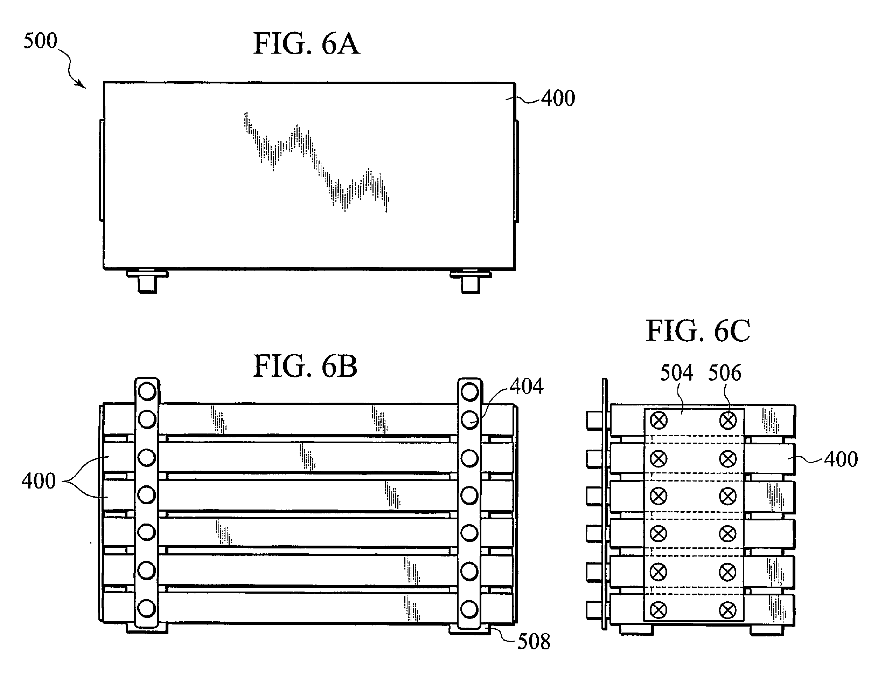

As shown in FIGS. 6A to 6C, it is possible that the assembled batteries 400 are connected in series or in parallel to form the multiple assembled batteries 500, or the multiple assembled batteries 500 are formed by the combination of the series connection and the parallel connection of the assembled batteries 400. The assembled battery 400 is fixed by connection plates 504 and connection screws 506 to be connected in series or in parallel. Between the assembled batteries 400 and in the lowermost portion, elastic members 508 are arranged to buffer shock applied from the outside.

The number of the batteries and the way to connect the batteries in the assembled battery and the multiple assembled batteries can be determined according to the output and the capacity required for the battery. When the assembled battery or the multiple assembled batteries are formed, compared with a single battery, stability is increased as the battery. The effect of the degradation of one cell on the whole battery can be decreased by forming the assembled battery or the multiple assembled batteries.

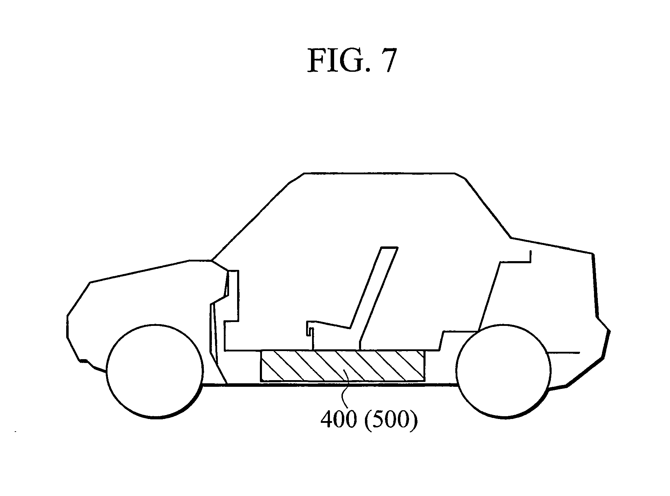

The assembled battery or the multiple assembled batteries can be preferably used for a vehicle. FIG. 7 shows a vehicle in which the assembled battery 400 or the multiple assembled batteries 500 of the present invention are mounted. The assembled battery 400 or multiple assembled batteries 500 which are mounted on the vehicle have the characteristics described above. Therefore, the vehicle in which the battery of the present invention is mounted can have the high durability and provide the sufficient output even if the battery is used for a long period. Further, since the occupied volume of the battery is small, the space inside the vehicle is widened.

The battery of the present invention is particularly beneficial when used for a vehicle. When the conventional battery is used for a vehicle, it is necessary to laminate many batteries, and the difference of the thickness of the battery is emphasized, which results in the problem that the battery is difficult to be fixed to a vehicle. The problem is solved by using the flat battery of the present invention which also has the durability against the vibration, and the battery degradation caused by the resonance is difficult to generate, even if the battery is used in environment such as a vehicle in which the vibration is always applied to the battery.

Since the battery of the present invention is small, it has a great advantage when the battery is applied to a vehicle. For example, it is assumed that the electrode and polymer electrolyte are manufactured by the inkjet method to form a bipolar battery. In this case, it is also assumed that the thickness of the collector is 5 $\mu$m, the thickness of the positive electrode layer is 5 $\mu$m, the thickness of the solid polymer electrolyte layer is 5 $\mu$m, the thickness of the negative electrode layer is 5 $\mu$m, and the thickness of one cell is 20 $\mu$m. When hundred cells are laminated to manufacture the bipolar battery having the output of 420 V, the bipolar battery has the output of 25 kW and 70 Wh in the battery volume of 0.5 liter. Theoretically, the same output as the conventional battery can be taken out by the battery of the present invention having the size not more than 1/10, compared with the conventional battery.

The method of manufacturing the electrode of the present invention will be described. The electrode of the present invention is manufactured by a process in which the electrode layer is formed by adopting the inkjet method.

When the electrode layer is formed by the inkjet method, as described above, the electrode layer which is thin and uniform can be manufactured. Since the effect of the electrode layer itself formed by the inkjet method has been already described, the description is omitted here.

The improvement of workability can be cited as the advantage of the method when the electrode layer is formed by the inkjet method. In the conventional method in which the electrode layer is formed by using the coater such as the roller coater, it is necessary that the individual coaters exist in each positive electrode and negative electrode, the manufacturing line becomes a large scale, and it also takes a long time for manufacturing the electrode. On the other hand, when the method in which the electrode layer is formed by the inkjet method of the present invention is adopted, the positive electrode layer and the negative electrode layer can be produced by a single inkjet line, and, in some cases, the polymer electrolyte membrane can be also produced. The inkjet method differs from the conventional method in that the electrode layer having the precise pattern can be produced. Further, design change can be freely performed on the computer. Therefore, the adoption of the method of the present invention can produce a plurality of kinds of the electrode layer or the polymer electrolyte membrane by one inkjet line.

In order to manufacture the electrode by adopting the method of the present invention, the base material in which the electrode layer is formed by the inkjet method is prepared at first. The collector or the polymer electrolyte membrane can be used as the base material. When the base material is difficult to be supplied to the inkjet apparatus by itself, it is possible to use the method in which the base material is attached to a medium such as paper to supply the base material to the inkjet apparatus.

The positive electrode ink and the negative electrode ink are prepared in advance of the printing. The electrolyte ink is also prepared when the polymer electrolyte membrane is also produced by the inkjet method.

The positive electrode active material, the conductive material, the polymer electrolyte raw material, the lithium salt, the polymerization initiator, and the solvent can be cited as a component contained in the positive electrode ink, and at least the positive electrode active material is contained in the positive electrode ink. It is possible to improve the ionic conductivity of the electrode layer in such a manner that the positive electrode ink contains the polymer electrolyte raw material such as macro-monomer of ethylene oxide and propylene oxide and the polymerization initiator such as benzyldimethylketal, the positive electrode layer is printed, and then the polymer electrolyte raw material is polymerized. The solvent is not particularly limited. However, for example, acetonitrile can be cited.

A compound ratio of the components contained in the positive electrode ink is not particularly limited. However, viscosity of the positive electrode ink should be low to the degree to which the inkjet method can be applied. The method of increasing the composition of the solvent and the method of increasing temperature of the positive electrode ink can be cited as the method of keeping the viscosity to the lower level. However, when the composition of the solvent is over increased, since the amount of active material per unit volume is decreased in the electrode layer, it is better that the composition of the solvent is suppressed to the minimum. It is also possible that the polymer electrolyte raw material and other compounds are improved so that the viscosity is decreased.

The negative electrode active material, the conductive material, the polymer electrolyte raw material, the lithium salt, the polymerization initiator, and the solvent can be cited as the component contained in the negative electrode ink, and at least the negative electrode active material is contained in the negative electrode ink. It is possible to improve the ionic conductivity of the electrode layer in such a manner that the negative electrode ink contains the polymer electrolyte raw material such as the macro-monomer of ethylene oxide and propylene oxide and the polymerization initiator such as benzyldimethylketal, the negative electrode layer is printed, and then the polymer electrolyte raw material is polymerized. The solvent is not particularly limited. However, for example, acetonitrile can be cited.

The compound ratio of the components contained in the negative electrode ink is not particularly limited. Since the description of the compound ratio is the same as described in the positive electrode ink, the description is omitted here.

The polymer electrolyte raw material, the lithium salt, the polymerization initiator, and the solvent can be cited as a component contained in the electrolyte ink, and at least the polymer electrolyte raw material is contained in the electrolyte ink. The polymer electrolyte raw material is not particularly limited, as long as the compound can form the polymer electrolyte layer by the polymerization after the inkjet. For example, the macro-monomer of ethylene oxide and propylene oxide can be cited as the polymer electrolyte raw material. The solvent is not particularly limited. However, for example, acetonitrile can be cited.

The compound ratio of the components contained in the electrolyte ink is not particularly limited. Since the description of the compound ratio is the same as described in the positive electrode ink, the description is omitted here. Since the electrolyte ink contains a relatively large amount of polymer electrolyte raw material, it should be noted that the polymer electrolyte raw material is easy to increase the viscosity of the ink. When the electrolyte contained in the produced battery is liquid, the electrolyte ink is certainly not required.

The viscosity of each kind of ink supplied to the inkjet apparatus is not particularly limited, but it is preferable that the viscosity of each kind of ink ranges from about 0.1 to 50 cP.

The ink is ejected to the base material by the inkjet method to form the electrode layer. When the electrode layer is formed, the pattern of the electrode layer is previously determined. When the electrode layer is formed based on an image made on the computer, the workability becomes excellent. The pattern determination with the computer is similar to the well-known operation of the image formation with a computer and a printer. Accordingly, it is said that the industrial production of the present invention is relatively easy to realize in that the developed knowledge of the field of the image formation can be adopted.

The collector is supplied to the inkjet apparatus, the electrode ink which is of the liquid containing the active material is ejected in the form of many particles, and the particles are adhered to the collector according to the pattern previously designed. In an ink ejection mechanism, any one of the piezoelectric method, the thermal inkjet method, and the bubble jet method can be adopted for the inkjet apparatus. It is preferable to use the piezoelectric method in which the ink particle is ejected by the change in volume of the piezoelectric element.

The volume of the particle ejected from the inkjet apparatus preferably ranges from 1 to 100 picoliters. When the volume of the ejected particle is too small, there is a possibility that the vibration is not sufficiently decreased. Same is said when the volume of the ejected particle is too large. The volumes of the particles ejected by the inkjet apparatus are substantially equal to one another, so that the manufactured electrodes and batteries have a high uniformity.

When it is insufficient for the film thickness of the electrode layer to adhere the particles only once by the inkjet apparatus, the particles can be adhered to the same position twice or more to increase the thickness of the electrode layer. "The same position" means the position equal to the position where the electrode layer is formed by the first-time printing of the inkjet apparatus. Namely, "the same position" means the overcoat with the same material. The thickness of the electrode can be increased in such a manner that the electrode layer having the uniform thickness is laminated by adopting the above technique. When the electrode layer is formed by the inkjet method, the uniformity of the formed electrode layer is very high. Thus, even when the electrode layer is laminated many times, the high uniformity is maintained.

After the electrode layer is formed, the solvent is removed by drying. When the polymer electrolyte raw material is compounded, in order to form the polymer electrolyte by the polymerization, the polymerization processing may be performed. For example, when the photopolymerization initiator is added, the electrode layer is irradiated with ultraviolet ray to start the polymerization, thus completing the electrode.

The process to which the method of manufacturing the electrode of the present invention is applied depends on the battery finally manufactured. For example, when the lithium ion battery in which the liquid electrolyte is disposed in the positive electrode and the negative electrode to seal them in the packaging material is produced, the positive electrode and the negative electrode are individually manufactured according to the present invention, and the battery may be assembled by using them. When the bipolar battery using an all solid polymer electrolyte is produced, the collector is used as the base material, the positive electrode layer, the polymer electrolyte membrane, and the negative electrode layer are produced in order by the inkjet method, and the collector is laminated. The bipolar battery having many laminated layers is completed by repeating the operation if necessary. In this case, the present invention is applied to the processes of making the positive electrode layer, the polymer electrolyte membrane, and the negative electrode layer.

The present invention will be described in detail below by Examples. In the following Examples, unless otherwise noted, the macro-monomer of ethylene oxide and propylene oxide was used as the polymer electrolyte raw material, $LiN(SO_2C_2F_5)_2$ (BETI) was used as the lithium salt, spinel $LiMn_2O_4$ (average particle diameter: 0.6 $\mu$m) was used as the positive electrode active material, the ground graphite (average particle diameter: 0.7 $\mu$m) was used as the negative electrode active material, and benzyldimethylketal was used as the photopolymerization initiator.

The preparations of the negative electrode ink, the positive electrode ink, and the electrolyte ink, the printing, and the assembly of the batteries were performed in a dry atmosphere not more than 30 °C below a dew point. The polymer electrolyte raw material was synthesized by the following method.

At first, under the presence of glycerin, polyether triol including random copolymer of ethylene oxide (EO) and propylene oxide (PO) was prepared by an anionic ring-open polymerization method while potassium hydroxide was used as a catalyst. Some amount of end OH group of polyether triol was changed to sodium alkoxide by reacting sodium methoxide in methanol and methylated by using methyl chloride. The remaining end OH group was esterified and substituted to an acryloyl group to make partially methylated polyether acrylate (PMPEA). The macro-monomer synthesized in the above manner was used as the polymer electrolyte raw material.

(Example 1)

The positive electrode active material (7 percent by mass), acetylene black as the conductive material (2 percent by mass), the polymer electrolyte raw material (4 percent by mass), the lithium salt (2 percent by mass), and the photopolymerization initiator (0.1 percent by mass to the polymer electrolyte raw material) were prepared, and acetonitrile (85 percent by mass) was added as the solvent. Then, sufficient agitation was performed to prepare slurry as the positive electrode ink. The viscosity of the ink was about 3 cP.

The prepared ink and the commercially available inkjet printer were used to make the positive electrode by the following procedure. When the above ink was used, there was the problem that acetonitrile as the solvent dissolves plastic parts located in the ink introducing portion of the inkjet printer. Therefore, the plastic parts located in the ink introducing portion were replaced with the metal parts, and the ink was directly supplied to the metal part from an ink chamber. The viscosity of the ink was low and there was a risk that the active material was precipitated, so that the ink chamber was always agitated by a rotary vane.

The inkjet printer was controlled by a commercially available computer and software. The prepared positive electrode ink was used in producing the positive electrode layer. The positive electrode layer was produced in such a manner that the pattern formed by the computer was printed by the inkjet printer. Since it was difficult to directly supply the metal foil to the printer, the metal foil was attached to a bond paper, and the metal foil with the bond paper was supplied to the printer to print.

The positive electrode ink was introduced to the inkjet printer, in which the above modification had been performed, to print the pattern formed on the computer on aluminum foil as the collector having the thickness of 20 $\mu$m. The volume of the particle of the positive electrode ink, which was ejected from the inkjet printer, was about 2 picoliters. The positive electrode layer was formed by printing the positive electrode ink on the same surface five times.

After the printing, two-hour drying was performed at 60 ˚C in a vacuum oven in order to dry the solvent. After the drying, in order to polymerize the polymer electrolyte raw material, the polymer electrolyte raw material was irradiated with an ultraviolet ray for 20 minutes in vacuum, thus laminating the positive electrode layer on the collector.

The same operation was also performed to the surface in which the positive electrode layer of the collector was not formed. As a result, the positive electrode in which the positive electrode layers were formed on the both surfaces of the collector was obtained. Then, the positive electrode was cut so that the predetermined battery size was obtained.

The thickness of the positive electrode was studied. The average thickness of the collector and the electrode layer was about 126 $\mu$m. The average thickness of the collector and the electrode layer is a total sum of the aluminum foil (20 $\mu$m) and the electrode layer (53 $\mu$m) formed on the both surfaces of the aluminum foil. The portion where the collector and the electrode layer were thinnest was near the cut portion of the electrode. On the other hand, the portion where the collector and the electrode layer were thickest was near the uncoated portion. The maximum thickness was 100.1% of the minimum thickness. Namely, a very flat electrode was obtained. The ratio of the average thickness of the collector and the electrode layer within 10 mm from the uncoated portion to the average thickness of the collector and the electrode layer in other regions was 100.0%. The ratio ($\sigma$/A) of the standard deviation ($\sigma$) of the thickness of the electrode layer to the average thickness (A) of the electrode layer was 0.71%.

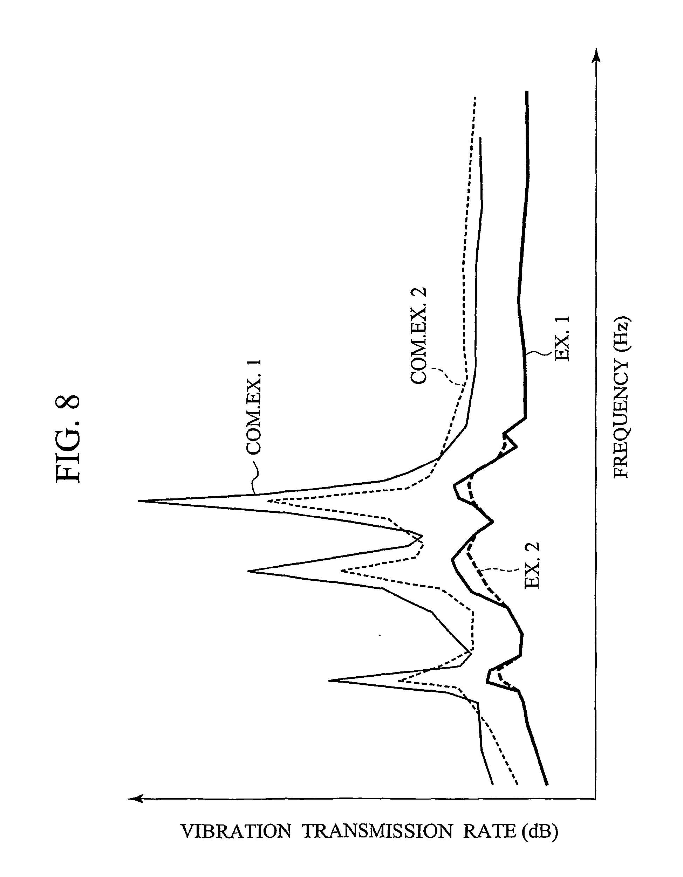

Vibration absorbing ability of the battery using the positive electrode was estimated by the following method. An acceleration pickup was set in the substantially central portion of the obtained battery, and a vibration spectrum of the acceleration pickup was measured when hammering was performed by an impulse hammer. The setting method was pursuant to JIS B0908 (ISO 5347). The measured spectrum was analyzed by an FFT analyzer to convert data into dimensions of a frequency and acceleration. Averaging and smoothing were performed to the obtained frequency to obtain a vibration transmission rate spectrum. FIG. 8 is the vibration transmission rate spectrum. An average attenuation rate was determined based on an area ratio of a first peak in the acceleration spectrum. The larger numerical value means that the vibration is further reduced. 45% of the attenuation rate reduction was obtained based on the battery using the positive electrode of later-mentioned Comparative example 1. The results are shown in Table 1.

In Examples, the measurement of the thickness was performed according to the above method. The repetition number N for calculating the average was set to 50 times.

(Example 2)

The negative electrode active material (9 percent by mass), the polymer electrolyte raw material (4 percent by mass), the lithium salt (2 percent by mass), and the photopolymerization initiator (0.1 percent by mass to the polymer electrolyte raw material) were prepared, and acetonitrile (85 percent by mass) was added as the solvent. Then, the sufficient agitation was performed to prepare the slurry as the negative electrode ink. The viscosity of the ink was about 3 cP.

Similarly to Example 1, the negative electrode ink was introduced to the inkjet printer to print the pattern formed on the computer on copper foil as the collector having the thickness of 15 $\mu$m. The volume of the particle of the negative electrode ink, which was ejected from the inkjet printer, was about 2 picoliters. The negative electrode layer was formed by printing the negative electrode ink on the same surface five times.

After the printing, the two-hour drying was performed at 60 ˚C in the vacuum oven in order to dry the solvent. After the drying, in order to polymerize the polymer electrolyte raw material, the polymer electrolyte raw material was irradiated with the ultraviolet ray for 20 minutes in vacuum, thus laminating the negative electrode layer on the collector.

The same operation was also performed to the surface in which the negative electrode layer of the collector was not formed. As a result, the negative electrode in which the negative electrode layers were formed on the both surfaces of the collector was obtained. Then, the negative electrode was cut so that the predetermined battery size was obtained.

The thickness of the negative electrode was studied. The average thickness of the collector and the electrode layer was about 122 $\mu$m. The average thickness of the collector and the electrode layer is a total sum of the copper foil (15 $\mu$m) and the electrode layer (53.5 $\mu$m) formed on the both surfaces of the copper foil. The portion where the collector and the electrode layer were thinnest was near the cut portion of the electrode. On the other hand, the portion where the collector and the electrode layer were thickest was near the uncoated portion. The maximum thickness was 100.1% of the minimum thickness. Namely, a very flat electrode was obtained. The ratio of the average thickness of the collector and the electrode layer within 10 mm from the uncoated portion to the average thickness of the collector and the electrode layer in other regions was 100.0%. The ratio ($\sigma$/A) of the standard deviation ($\sigma$) of the thickness of the electrode layer to the average thickness (A) of the electrode layer was 0.57%.

The vibration absorbing ability of the battery using the negative electrode was estimated in a manner similar to Example 1. 40% of the attenuation rate reduction effect was obtained based on the battery using the negative electrode of later-mentioned Comparative example 2. The results are shown in Table 1.

(Comparative Example 1)

The positive electrode active material (7 percent by mass), acetylene black as the conductive material (2 percent by mass), the polymer electrolyte raw material (4 percent by mass), the lithium salt (2 percent by mass), and the photopolymerization initiator (0.1 percent by mass to the polymer electrolyte raw material) were prepared, and acetonitrile (85 percent by mass) was added as the solvent. Then, the sufficient agitation was performed to prepare the slurry for positive electrode layer.

The slurry for positive electrode layer was applied onto the aluminum foil as the collector having the thickness of 20 $\mu$m by the roller coater. After the coating, the two-hour drying was performed at 60 ˚C in the vacuum oven in order to dry the solvent. After the drying, in order to polymerize the polymer electrolyte raw material, the polymer electrolyte raw material was irradiated with the ultraviolet ray for 20 minutes in vacuum, thus laminating the positive electrode layer on the collector.

The same operation was also performed to the surface in which the positive electrode layer of the collector was not formed. As a result, the positive electrode in which the positive electrode layers were formed on the both surfaces of the collector was obtained. Then, the positive electrode was cut so that the predetermined battery size was obtained.

The thickness of the positive electrode was studied. The average thickness of the collector and the electrode layer was about 129 $\mu$m. The portion where the collector and the electrode layer were thinnest was near the cut portion of the electrode. On the other hand, the portion where the collector and the electrode layer were thickest was near the uncoated portion. The maximum thickness was 106.3% of the minimum thickness. Namely, an electrode whose thickness was greater near the uncoated portion was obtained. The ratio of the average thickness of the collector and the electrode layer within 10 mm from the uncoated portion to the average thickness of the collector and the electrode layer in other regions was 104.1%. The ratio ($\sigma$/A) of the standard deviation ($\sigma$) of the thickness of the electrode layer to the average thickness (A) of the electrode layer was 3.1 %.

(Comparative Example 2)

The negative electrode active material (9 percent by mass), the polymer electrolyte raw material (4 percent by mass), the lithium salt (2 percent by mass), and the photopolymerization initiator (0.1 percent by mass to the polymer electrolyte raw material) were prepared, and acetonitrile (85 percent by mass) was added as the solvent. Then, the sufficient agitation was performed to prepare the slurry for negative electrode layer.

The slurry for negative electrode layer was applied onto the copper foil as the collector having the thickness of 15 $\mu$m by the roller coater. After the coating, the two-hour drying was performed at 60 ˚C in the vacuum oven in order to dry the solvent. After the drying, in order to polymerize the polymer electrolyte raw material, the polymer electrolyte raw material was irradiated with the ultraviolet ray for 20 minutes in vacuum, thus laminating the negative electrode layer on the collector.

The same operation was also performed to the surface in which the negative electrode layer of the collector was not formed. As a result, the negative electrode in which the negative electrode layers were formed on the both surfaces of the collector was obtained. Then, the negative electrode was cut so that the predetermined battery size was obtained.

The thickness of the positive electrode was studied. The average thickness of the collector and the electrode layer was about 124 $\mu$m. The portion where the collector and the electrode layer were thinnest was near the cut portion of the electrode. On the other hand, the portion where the collector and the electrode layer were thickest was near the uncoated portion. The maximum thickness was 107.0% of the minimum thickness. Namely, an electrode whose thickness was greater near the uncoated portion was obtained. The ratio of the average thickness of the collector and the electrode layer within 10 mm from the uncoated portion to the average thickness of the collector and the electrode layer in other regions was 104.4%. The ratio ($\sigma$/A) of the standard deviation ($\sigma$) of the thickness of the electrode layer to the average thickness (A) of the electrode layer was 3.2%.

Table 1

| | Average thickness of collector and electrode layer ($\mu$m) | $\dfrac{\text{Maximum thickness of collector and electrode layer}}{\text{Minimum thickness of collector and electrode layer}}$ (%) | Attenuation rate reduction (%) |
|---|---|---|---|
| Ex. 1 | 126.2 | 100.1 | 45 |
| Ex. 2 | 122.0 | 100.1 | 40 |
| Com. Ex. 1 | 128.8 | 106.3 | Basis |
| Com. Ex. 2 | 124.4 | 107.0 | Basis |

As shown in Table 1, the electrode of the present invention has a very high flatness and an excellent attenuation rate reduction and contributes to extension of the battery life. Further, since the thin and uniform electrode can be formed, the compact power supply having the high output is realized.

INDUSTRIAL APPLICABILITY

The electrode of the present invention is very thin and the uniformity of the film thickness is high. Therefore, the heat dissipation characteristics of the battery are uniform, and the local degradation is hardly generated in the battery. The crack and the rupture are also hardly generated in the battery. When the electrode layer is formed by the inkjet method, the density or the thickness can be precisely controlled, and the very thin electrode having the high uniformity can be manufactured which could not have been achieved by the conventional coater.

**Claims**

1. An electrode (100), comprising:

   a collector (104); and
   an electrode layer (102) which is disposed on the collector (104) and comprises a plurality of dots (202) containing an active material, each of the dots (202) being connected to the adjacent dots (202) by connecting portions (204), wherein an average thickness (h) of the collector (104) and the electrode layer (102) ranges from 5 to 300 $\mu$m, and a maximum thickness of the collector (104) and the electrode layer (102) is not more than 105% of a minimum thickness of the collector (104) and the electrode layer (102), and
   wherein the dots (202) and the connecting portions (204) are formed by drying liquid particles containing the active material, the liquid particle being connected to the adjacent liquid particle by surface tension.

2. An electrode (100) according to claim 1,
   wherein the average thickness (h) of the collector (104) and the electrode layer (102) which are located within 10 mm from a region (106) where the electrode layer (102) is not disposed on the collector (104) is not more than 104% of the average thickness (h) in other regions.

3.  An electrode (100) according to claim 2,
    wherein the region (106) where the electrode layer (102) is not disposed on the collector (104) is a region to which a tab is connected.

4.  An electrode (100) according to claim 1,
    wherein a ratio ($\sigma$/A) of a standard deviation ($\sigma$) of the thickness of the electrode layer (102) to an average thickness (A) of the electrode layer (102) is not more than 3%.

5.  An electrode (100) according to claim 1,
    wherein the electrode layer (102) is formed by an inkjet method in which a liquid containing the active material is ejected in the form of a plurality of the liquid particles to adhere to a base material.

6.  An electrode (100) according to claim 5,
    wherein the base material is any one of the collector (104) and a polymer electrolyte membrane (108).

7.  An electrode (100) according to claim 1,
    wherein the active material is a positive electrode active material including any one of Li-Mn based composite oxide and Li-Ni based composite oxide.

8.  An electrode (100) according to claim 1,
    wherein the active material is a negative electrode active material including any one of a crystalline carbon material and a noncrystalline carbon material.

9.  A battery (300), comprising:

    an electrode (100) according to any one of the claims 1 to 8.

10. A battery (300) according to claim 9,
    wherein the battery (300) is a rectangular battery in which a power generating element including the electrode (100) is stored in a packaging material including a polymer metal composite film, and
    the average thickness (h) of a portion where the power generating element is stored within 10 mm from an end of the portion where the power generating element is stored is not more than 104% of the average thickness (h) in the portion exceeding 10 mm from the end.

11. A battery (300) according to claim 9,
    wherein the battery is a lithium secondary battery.

12. A battery (300) according to claim 9,
    wherein the battery (300) is used for an assembled battery (400).

13. A battery (300) according to claim 12,
    wherein the assembled battery (400) is used for multiple assembled batteries (500).

14. A battery (300) according to claim 12,
    wherein the assembled battery (400) is used in a vehicle.

15. A battery (300) according to claim 13,
    wherein the multiple assembled batteries (500) are used in a vehicle.

16. A method of manufacturing an electrode (100), comprising:

    ejecting a plurality of liquid particles containing an active material to adhere to a base material so that the liquid particle is connected to the adjacent liquid particles by surface tension; and
    drying a plurality of liquid particles, thereby forming an electrode layer (102) which is disposed on the base material and comprises a plurality of dots (202) formed by drying the liquid particles, each of the liquid particles being connected to the adjacent dots (202) by connecting portions (204).

**17.** A method of manufacturing an electrode (100) according to claim 16,
wherein the base material is any one of a collector (104) and a polymer electrolyte membrane (108).

**18.** A method of manufacturing an electrode (100) according to claim 16,
wherein the liquid particles are is adhered to the same position of the base material twice or more to increase a thickness of the electrode layer (102).

**19.** A method of manufacturing an electrode (100) according to claim 16,
wherein the liquid particle are ejected by a change in volume of a piezoelectric element.

**20.** A method of manufacturing an electrode (100) according to claim 16,
wherein a volume of the liquid particle ranges from 1 to 100 picoliters.

**21.** A method of manufacturing an electrode (100) according to claim 16,
wherein the base material is a collector (104),
an average thickness (h) of the collector (104) and the electrode layer (102) ranges from 5 to 300 $\mu$m, and
a maximum thickness (h) of the collector (104) and the electrode layer (102) is not more than 105% of a minimum thickness of the collector (104) and the electrode layer (102).

**22.** A method of manufacturing an electrode (100) according to claim 21,
wherein the average thickness (h) of the collector (104) and the electrode layer (102) which are located within 10 mm from a region where the electrode layer (102) is not disposed on the collector (104) is not more than 104% of the average thickness (h) in other regions.

**23.** A method of manufacturing an electrode (100) according to claim 22,
wherein the region where the electrode layer (102) is not disposed on the collector (104) is the region to which a tab is connected.

**24.** A method of manufacturing an electrode (100) according to claim 21,
wherein a ratio ($\sigma$/A) of a standard deviation ($\sigma$) of the thickness of the electrode layer (102) to an average thickness (A) of the electrode layer (102) is not more than 3%.

**25.** A method of manufacturing an electrode (100) according to claim 16,
wherein the active material is a positive electrode active material including any one of Li-Mn based composite oxide and Li-Ni based composite oxide.

**26.** A method of manufacturing an electrode (100) according to claim 16,
wherein the active material is a negative electrode active material including any one of a crystalline carbon material and a noncrystalline carbon material.

**27.** A method of manufacturing a battery (300), comprising:

ejecting a plurality of first liquid particles containing a negative electrode active material to adhere to a base material so that the first liquid particle is connected to the adjacent first liquid particles by surface tension;
drying a plurality of the first liquid particles, thereby forming a negative electrode layer (102) which is disposed on the base material and comprises a plurality of first dots (202) formed by drying the first liquid particles, each of the first liquid particles being connected to the adjacent first solid particles (202) by first connecting portions (204);
ejecting a plurality of second liquid particles containing a positive electrode active material to adhere to a base material so that the second liquid particle is connected to the adjacent second liquid particles by surface tension; and
drying a plurality of second liquid particles, thereby forming a positive electrode layer (102) which is disposed on the base material and comprises a plurality of second dots (202) formed by drying the second liquid particles, each of the second liquid particles being connected to the adjacent second dots (202) by second connecting portions (204).

**28.** A method of manufacturing a battery (300) according to claim 27, further comprising:

forming a polymer electrolyte membrane (108) by adopting the inkjet method in which the liquid containing a polymerization initiator and a polymer electrolyte raw material is ejected in the form of a plurality of liquid particles.

29. A method of manufacturing a battery (300) according to claim 27,
wherein the battery (300) is a rectangular battery in which a power generating element including the electrode (100) is stored in a packaging material including a polymer metal composite film, and
the average thickness (h) of a portion where the power generating element is stored within 10 mm from an end portion of the portion where the power generating element is stored is not more than 104% of the average thickness (h) in the portion exceeding 10 mm from the end portion.

30. A method (100) according to any one of claims 16 to 26, wherein a volume of the liquid particle ranges from 1 to 100 picoliters.

31. A method (100) according to any one of claims 16 to 26, wherein a volume of the liquid particle is 2 picoliters.

**Patentansprüche**

1. Elektrode (100), umfassend:

einen Kollektor (104); und
eine Elektrodenschicht (102), die auf dem Kollektor (104) angeordnet ist und
eine Vielzahl von Punkten (202), die ein aktives Material enthalten, umfasst,
wobei jeder der Punkte (202) mit den benachbarten Punkten (202) durch Verbindungsbereiche (204) verbunden ist,
wobei eine durchschnittliche Dicke (h) des Kollektors (104) und der Elektrodenschicht (102) in einen Bereich von 5 bis 300 $\mu$m liegt, und eine maximale Dicke des Kollektors (104) und der Elektrodenschicht (102) nicht mehr als 105 % einer minimalen Dicke des Kollektors (104) und der Elektrodenschicht (102) beträgt, und
wobei die Punkte (202) und die Verbindungsbereiche (204) durch Trocknen von flüssigen Teilchen, die das aktive Material enthalten, ausgebildet werden, wobei das flüssige Teilchen mit dem benachbarten flüssigen Teilchen durch Oberflächenspannung verbunden wird.

2. Elektrode (100) nach Anspruch 1, wobei die durchschnittliche Dicke (h) des Kollektors (104) und der Elektrodenschicht (102), die innerhalb von 10 mm von einem Bereich (106), in dem die Elektrodenschicht (102) nicht auf dem Kollektor (104) angeordnet ist, liegen, nicht mehr als 104 % der durchschnittlichen Dicke (h) in anderen Bereichen beträgt.

3. Elektrode (100) nach Anspruch 2, wobei der Bereich (106), in dem die Elektrodenschicht (102) nicht auf dem Kollektor (104) angeordnet ist, ein Bereich ist, mit dem einem Streifen verbunden ist.

4. Elektrode (100) nach Anspruch 1, wobei ein Verhältnis ($\sigma$/A) einer Normabweichung ($\sigma$) der Dicke der Elektroden-schicht (102) zu einer durchschnittlichen Dicke (A) der Elektrodenschicht (102) nicht mehr als 3 % beträgt.

5. Elektrode (100) nach Anspruch 1, wobei die Elektrodenschicht (102) durch ein Tintenstrahlverfahren ausgebildet wird, bei dem eine Flüssigkeit, die das aktive Material enthält, in der Form einer Vielzahl von flüssigen Teilchen ausgestoßen wird, um an einem Basismaterial anzuhaften.

6. Elektrode (100) nach Anspruch 5, wobei das Basismaterial der Kollektor (104) und/oder eine Polymerelektrolytmembran (108) ist.

7. Elektrode (100) nach Anspruch 1, wobei das aktive Material ein positives aktives Elektrodenmaterial ist, einschließlich Li-Mn-basiertes Mischoxid und/oder Li-Ni-basiertes Mischoxid.

8. Elektrode (100) nach Anspruch 1, wobei das aktive Material ein negatives aktives Elektrodenmaterial ist, einschließlich eines kristallinen Kohlenstoffmaterials und/oder eines nicht-kristallinen Kohlenstoffmaterials.

9. Batterie (300), umfassend eine Elektrode (100) nach einem der Ansprüche 1 bis 8.

**10.** Batterie (300) nach Anspruch 9, wobei
die Batterie (300) eine Rechteckbatterie ist, in der ein Stromerzeugungselement einschließlich der Elektrode (100) in einem Verpackungsmaterial, das eine Polymer-Metall-Mischfolie umfasst, gelagert ist, und die durchschnittliche Dicke (h) eines Bereichs, in dem das Stromerzeugungselement innerhalb von 10 mm von einem Ende des Bereichs, in dem das Stromerzeugungselement gelagert ist, nicht mehr als 104 % der durchschnittlichen Dicke (h) in dem Bereich jenseits der 10 mm von dem Ende beträgt.

**11.** Batterie (300) nach Anspruch 9, wobei die Batterie eine Lithium-Sekundärbatterie ist.

**12.** Batterie (300) nach Anspruch 9, wobei die Batterie (300) für eine Einbaubatterie (400) verwendet wird.

**13.** Batterie (300) nach Anspruch 12, wobei die Einbaubatterie (400) für Mehrfach-Einbaubatterien (500) verwendet wird.

**14.** Batterie (300) nach Anspruch 12, wobei die Einbaubatterie (400) in einem Fahrzeug verwendet wird.

**15.** Batterie (300) nach Anspruch 13, wobei die Mehrfach-Einbaubatterien (500) in einem Fahrzeug verwendet werden.

**16.** Verfahren zur Herstellung einer Elektrode (100), umfassend:

Ausstoßen einer Vielzahl von flüssigen Teilchen, die ein aktives Material enthalten, um an einem Basismaterial anzuhaften, so dass das flüssige Teilchen durch Oberflächenspannung mit den benachbarten flüssigen Teilchen verbunden wird; und
Trocknen einer Vielzahl von flüssigen Teilchen, **dadurch** Ausbilden einer Elektrodenschicht (102), die auf dem Basismaterial angeordnet ist und eine Vielzahl von Punkten (202) umfasst, die durch Trocknen der flüssigen Teilchen ausgebildet werden, wobei jedes der flüssigen Teilchen durch Verbindungsbereiche (204) mit den benachbarten Punkten (202) verbunden ist.

**17.** Verfahren zur Herstellung einer Elektrode (100) nach Anspruch 16, wobei das Basismaterial ein Kollektor (104) und/oder eine Polymerelektrolytmembran (108) ist.

**18.** Verfahren zur Herstellung einer Elektrode (100) nach Anspruch 16, wobei die flüssigen Teilchen zweimal oder öfter an der gleichen Position des Basismaterials anhaften, um eine Dicke der Elektrodenschicht (102) zu vergrößern.

**19.** Verfahren zur Herstellung einer Elektrode (100) nach Anspruch 16, wobei die flüssigen Teilchen durch eine Volumenänderung eines piezoelektrischen Elements ausgestoßen werden.

**20.** Verfahren zur Herstellung einer Elektrode (100) nach Anspruch 16, wobei ein Volumen des flüssigen Teilchens in einem Bereich von 1 bis 100 Pikoliter liegt.

**21.** Verfahren zur Herstellung einer Elektrode (100) nach Anspruch 16, wobei das Basismaterial ein Kollektor (104) ist, eine durchschnittliche Dicke (h) des Kollektors und der Elektrodenschicht (102) in einen Bereich von 5 bis 300 $\mu$m liegt, und
eine maximale Dicke (h) des Kollektors (104) und der Elektrodenschicht (102) nicht mehr als 105 % einer minimalen Dicke des Kollektors (104) und der Elektrodenschicht (102) beträgt.

**22.** Verfahren zur Herstellung einer Elektrode (100) nach Anspruch 21, wobei die durchschnittliche Dicke (h) des Kollektors (104) und der Elektrodenschicht (102), die innerhalb von 10 mm von einem Bereich, in dem die Elektrodenschicht (102) nicht auf dem Kollektor (104) angeordnet ist, liegen, nicht mehr als 104 % der durchschnittlichen Dicke (h) in anderen Bereichen beträgt.

**23.** Verfahren zur Herstellung einer Elektrode (100) nach Anspruch 22, wobei der Bereich, in dem die Elektrodenschicht (102) nicht auf dem Kollektor (104) angeordnet ist, der Bereich ist, mit dem einem Streifen verbunden ist.

**24.** Verfahren zur Herstellung einer Elektrode (100) nach Anspruch 21, wobei ein Verhältnis ($\sigma$/A) einer Normabweichung ($\sigma$) der Dicke der Elektrodenschicht (102) zu einer durchschnittlichen Dicke (A) der Elektrodenschicht (102) nicht mehr als 3 % beträgt.

**25.** Verfahren zur Herstellung einer Elektrode (100) nach Anspruch 16, wobei das aktive Material ein positives aktives Elektrodenmaterial ist, einschließlich Li-Mn-basiertes Mischoxid und/oder Li-Ni-basiertes Mischoxid.

**26.** Verfahren zur Herstellung einer Elektrode (100) nach Anspruch 16, wobei das aktive Material ein negatives aktives Elektrodenmaterial ist, einschließlich eines kristallinen Kohlenstoffmaterials und/oder eines nicht-kristallinen Kohlenstoffmaterials.

**27.** Verfahren zur Herstellung einer Batterie (300), umfassend:

Ausstoßen einer Vielzahl von ersten flüssigen Teilchen, die ein negatives aktives Elektrodenmaterial enthalten, um an einem Basismaterial anzuhaften,

so dass das erste flüssige Teilchen durch Oberflächenspannung mit den benachbarten ersten flüssigen Teilchen verbunden wird; und

Trocknen einer Vielzahl von ersten flüssigen Teilchen, **dadurch** Ausbilden einer negativen Elektrodenschicht (102), die auf dem Basismaterial angeordnet ist und eine Vielzahl von ersten Punkten (202) umfasst, die durch Trocknen der ersten flüssigen Teilchen ausgebildet werden, wobei jedes der ersten flüssigen Teilchen durch erste Verbindungsbereiche (204) mit den benachbarten ersten festen Teilchen (202) verbunden ist;

Ausstoßen einer Vielzahl von zweiten flüssigen Teilchen, die ein positives aktives Elektrodenmaterial enthalten, um an einem Basismaterial anzuhaften,

so dass das zweite flüssige Teilchen durch Oberflächenspannung mit den benachbarten zweiten flüssigen Teilchen verbunden wird; und

Trocknen einer Vielzahl von zweiten flüssigen Teilchen, **dadurch** Ausbilden einer positiven Elektrodenschicht (102), die auf dem Basismaterial angeordnet ist und eine Vielzahl von zweiten Punkten (202) umfasst, die durch Trocknen der zweiten flüssigen Teilchen ausgebildet werden, wobei jedes der zweiten flüssigen Teilchen durch zweite Verbindungsbereiche (204) mit den benachbarten zweiten Punkten (202) verbunden ist.

**28.** Verfahren zur Herstellung einer Batterie (300) nach Anspruch 27, ferner umfassend:

Ausbilden einer Polymerelektrolytmembran (108) durch Anwenden des Tintenstrahlverfahrens, bei dem die Flüssigkeit, die einen Polymerisierungsinitiator und ein Polymerelektrolyt-Rohmaterial enthält, in der Form einer Vielzahl von flüssigen Teilchen ausgestoßen wird.

**29.** Verfahren zur Herstellung einer Batterie (300) nach Anspruch 27, wobei die Batterie (300) eine Rechteckbatterie ist, in der ein Stromerzeugungselement einschließlich der Elektrode (100) in einem Verpackungsmaterial, das eine Polymer-Metall-Mischfolie umfasst, gelagert ist, und

die durchschnittliche Dicke (h) eines Bereichs, in dem das Stromerzeugungselement innerhalb von 10 mm von einem Ende des Bereichs, in dem das Stromerzeugungselement gelagert ist, nicht mehr als 104 % der durchschnittlichen Dicke (h) in dem Bereich jenseits der 10 mm von dem Endbereich beträgt.

**30.** Verfahren (100) nach einem der Ansprüche 16 bis 26, wobei ein Volumen der flüssigen Teilchen in einem Bereich von 1 bis 100 Pikolitern liegt.

**31.** Verfahren (100) nach einem der Ansprüche 16 bis 26, wobei ein Volumen der flüssigen Teilchen 2 Pikoliter beträgt.

**Revendications**

**1.** Electrode (100), comprenant :

un collecteur (104) ; et

une couche d'électrode (102) qui est disposée sur le collecteur (104) et qui comprend une pluralité de points (202) contenant un matériau actif, les points (202) étant chacun connectés aux points adjacents (202) par des parties de connexion (204),

dans laquelle une épaisseur moyenne (h) du collecteur (104) et de la couche d'électrode (102) se situe dans la plage allant de 5 $\mu$m à 300 $\mu$m, et une épaisseur maximale du collecteur (104) et de la couche d'électrode (102) représente au plus 105 % d'une épaisseur minimale du collecteur (104) et de la couche d'électrode (102), et

dans laquelle les points (202) et les parties de connexion (204) sont formés en séchant des particules liquides contenant le matériau actif, la particule liquide étant connectée à la particule liquide adjacente par tension superficielle.

**2.** Electrode (100) selon la revendication 1,
dans laquelle l'épaisseur moyenne (h) du collecteur (104) et de la couche d'électrode (102) qui sont situés à moins de 10 mm d'une région (106) où la couche d'électrode (102) n'est pas disposée sur le collecteur (104) représente au plus 104 % de l'épaisseur moyenne (h) dans les autres régions.

**3.** Electrode (100) selon la revendication 2,
dans laquelle la région (106) où la couche d'électrode (102) n'est pas disposée sur le collecteur (104) est une région à laquelle une languette est connectée.

**4.** Electrode (100) selon la revendication 1,
dans laquelle un rapport ($\sigma$/A) entre un écart-type ($\sigma$) de l'épaisseur de la couche d'électrode (102) et une épaisseur moyenne (A) de la couche d'électrode (102) est d'au plus 3 %.

**5.** Electrode (100) selon la revendication 1,
dans laquelle la couche d'électrode (102) est formée par un procédé de jet d'encre dans lequel un liquide contenant le matériau actif est éjecté sous la forme d'une pluralité des particules liquides pour qu'elles adhèrent à un matériau de base.

**6.** Electrode (100) selon la revendication 5,
dans laquelle le matériau de base est un élément quelconque parmi le collecteur (104) et une membrane d'électrolyte polymère (108).

**7.** Electrode (100) selon la revendication 1,
dans laquelle le matériau actif est un matériau actif pour électrode positive comprenant un oxyde composite quelconque parmi un oxyde composite à base de Li-Mn et un oxyde composite à base de Li-Ni.

**8.** Electrode (100) selon la revendication 1,
dans laquelle le matériau actif est un matériau actif pour électrode négative comprenant un matériau de carbone quelconque parmi un matériau de carbone cristallin et un matériau de carbone non cristallin.

**9.** Accumulateur (300), comprenant :

une électrode (100) selon l'une quelconque des revendications 1 à 8.

**10.** Accumulateur (300) selon la revendication 9,
dans lequel l'accumulateur (300) est un accumulateur rectangulaire dans lequel un élément générateur d'énergie comprenant l'électrode (100) est stocké dans un matériau d'emballage comprenant un film composite polymère-métal, et
l'épaisseur moyenne (h) d'une partie où l'élément générateur d'énergie est stocké à moins de 10 mm d'une extrémité de la partie où l'élément générateur d'énergie est stocké représente au plus 104 % de l'épaisseur moyenne (h) dans la partie située à plus de 10 mm de l'extrémité.

**11.** Accumulateur (300) selon la revendication 9,
dans lequel l'accumulateur est une batterie rechargeable au lithium.

**12.** Accumulateur (300) selon la revendication 9,
dans lequel l'accumulateur (300) est utilisé pour un accumulateur assemblé (400).

**13.** Accumulateur (300) selon la revendication 12,
dans lequel l'accumulateur assemblé (400) est utilisé pour de multiples accumulateurs assemblés (500).

**14.** Accumulateur (300) selon la revendication 12,
dans lequel l'accumulateur assemblé (400) est utilisé dans un véhicule.

**15.** Accumulateur (300) selon la revendication 13,
dans lequel les multiples accumulateurs assemblés (500) sont utilisés dans un véhicule.

**16.** Procédé de fabrication d'une électrode (100), comprenant :

l'éjection d'une pluralité de particules liquides contenant un matériau actif pour qu'elles adhèrent à un matériau de base de manière à ce que la particule liquide soit connectée aux particules liquides adjacentes par tension superficielle ; et

le séchage d'une pluralité de particules liquides, pour ainsi former une couche d'électrode (102) qui est disposée sur le matériau de base et qui comprend une pluralité de points (202) formés par le séchage des particules liquides, les particules liquides étant chacune connectées aux points adjacents (202) par des parties de connexion (204).

17. Procédé de fabrication d'une électrode (100) selon la revendication 16, dans lequel le matériau de base est un élément quelconque parmi un collecteur (104) et une membrane d'électrolyte polymère (108).

18. Procédé de fabrication d'une électrode (100) selon la revendication 16, dans lequel on fait adhérer les particules liquides deux fois ou plus de deux fois à la même position du matériau de base pour augmenter une épaisseur de la couche d'électrode (102).

19. Procédé de fabrication d'une électrode (100) selon la revendication 16, dans lequel les particules liquides sont éjectées par un changement de volume d'un élément piézoélectrique.

20. Procédé de fabrication d'une électrode (100) selon la revendication 16, dans lequel un volume de la particule liquide se situe dans la plage allant de 1 à 100 picolitres.

21. Procédé de fabrication d'une électrode (100) selon la revendication 16, dans lequel le matériau de base est un collecteur (104), une épaisseur moyenne (h) du collecteur (104) et de la couche d'électrode (102) se situe dans la plage allant de 5 μm à 300 μm, et une épaisseur maximale (h) du collecteur (104) et de la couche d'électrode (102) représente au plus 105 % d'une épaisseur minimale du collecteur (104) et de la couche d'électrode (102).

22. Procédé de fabrication d'une électrode (100) selon la revendication 21, dans lequel l'épaisseur moyenne (h) du collecteur (104) et de la couche d'électrode (102) qui sont situés à moins de 10 mm d'une région où la couche d'électrode (102) n'est pas disposée sur le collecteur (104) représente au plus 104 % de l'épaisseur moyenne (h) dans les autres régions.

23. Procédé de fabrication d'une électrode (100) selon la revendication 22, dans lequel la région où la couche d'électrode (102) n'est pas disposée sur le collecteur (104) est la région à laquelle une languette est connectée.

24. Procédé de fabrication d'une électrode (100) selon la revendication 21, dans lequel un rapport (σ/A) entre un écart-type (σ) de l'épaisseur de la couche d'électrode (102) et une épaisseur moyenne (A) de la couche d'électrode (102) est d'au plus 3 %.

25. Procédé de fabrication d'une électrode (100) selon la revendication 16, dans lequel le matériau actif est un matériau actif pour électrode positive comprenant un oxyde composite quelconque parmi un oxyde composite à base de Li-Mn et un oxyde composite à base de Li-Ni.

26. Procédé de fabrication d'une électrode (100) selon la revendication 16, dans lequel le matériau actif est un matériau actif pour électrode négative comprenant un matériau de carbone quelconque parmi un matériau de carbone cristallin et un matériau de carbone non cristallin.

27. Procédé de fabrication d'un accumulateur (300), comprenant :

l'éjection d'une pluralité de premières particules liquides contenant un matériau actif pour électrode négative pour qu'elles adhèrent à un matériau de base de manière à ce que la première particule liquide soit connectée aux premières particules liquides adjacentes par tension superficielle ;

le séchage d'une pluralité des premières particules liquides, pour ainsi former une couche d'électrode négative (102) qui est disposée sur le matériau de base et qui comprend une pluralité de premiers points (202) formés par le séchage des premières particules liquides, les premières particules liquides étant chacune connectées aux premières particules solides adjacentes (202) par des premières parties de connexion (204) ;

l'éjection d'une pluralité de secondes particules liquides contenant un matériau actif pour électrode positive pour qu'elles adhèrent à un matériau de base de manière à ce que la seconde particule liquide soit connectée aux secondes particules liquides adjacentes par tension superficielle ; et

le séchage d'une pluralité de secondes particules liquides, pour ainsi former une couche d'électrode positive (102) qui est disposée sur le matériau de base et qui comprend une pluralité de seconds points (202) formés par le séchage des secondes particules liquides, les secondes particules liquides étant chacune connectées aux seconds points adjacents (202) par des secondes parties de connexion (204).

28. Procédé de fabrication d'un accumulateur (300) selon la revendication 27, comprenant en outre :

la formation d'une membrane d'électrolyte polymère (108) par l'adoption du procédé par jet d'encre dans lequel le liquide contenant un initiateur de polymérisation et une matière première d'électrolyte polymère est éjecté sous la forme d'une pluralité de particules liquides.

29. Procédé de fabrication d'un accumulateur (300) selon la revendication 27,

dans lequel l'accumulateur (300) est un accumulateur rectangulaire dans lequel un élément générateur d'énergie comprenant l'électrode (100) est stocké dans un matériau d'emballage comprenant un film composite polymère-métal, et

l'épaisseur moyenne (h) d'une partie où l'élément générateur d'énergie est stocké à moins de 10 mm d'une partie d'extrémité de la partie où l'élément générateur d'énergie est stocké représente au plus 104 % de l'épaisseur moyenne (h) dans la partie située à plus de 10 mm de la partie d'extrémité.

30. Procédé (100) selon l'une quelconque des revendications 16 à 26, dans lequel un volume de la particule liquide se situe dans la plage allant de 1 à 100 picolitres.

31. Procédé (100) selon l'une quelconque des revendications 16 à 26, dans lequel un volume de la particule liquide est de 2 picolitres.

# FIG. 1A

# FIG. 1B

# FIG. 1C

# FIG. 2A

# FIG. 2B

FIG. 3A

FIG. 3B

# FIG. 4

EP 1 654 775 B1

# FIG. 5A

400

300

404

# FIG. 5B

# FIG. 5C

402

EP 1 654 775 B1

FIG. 6A

500

400

FIG. 6B

404

400

508

FIG. 6C

504  506

400

EP 1 654 775 B1

# FIG. 7

400 (500)

FIG. 8

COM.EX. 1

COM.EX. 2

EX. 1

EX. 2

VIBRATION TRANSMISSION RATE (dB)

FREQUENCY (Hz)

**EP 1 654 775 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003151526 A
- JP 2002110239 A
- JP 2002164043 A
- US 6423446 B1
- US 6234225 B1
- WO 0180338 A